# EUROPÄISCHE PATENTSCHRIFT

(11) **EP 0 734 128 B1**
(45) Veröffentlichungstag und Bekanntmachung des Hinweises auf die Patenterteilung: **13.10.2004**
(21) Anmeldenummer: 95119662.5
(22) Anmeldetag: 13.12.1995
(51) Int. Cl.: H04H 1/00

(54) **Rundfunkempfänger für Radiodatenempfang**
Radio data system broadcast receiver
Récepteur de radiodiffusion pour la réception de signaux RDS

(30) Priorität: 21.03.1995 DE 19510220
(43) Veröffentlichungstag der Anmeldung: 25.09.1996
(73) Patentinhaber: Robert Bosch GmbH, 70442 Stuttgart (DE)
(72) Erfinder: Nyenhuis, Detlev, D-31079 Sibbesse (DE)

(56) Entgegenhaltungen:
- EP-A- 0 529 183
- US-A- 4 347 484
- US-A- 5 345 602
- PATENT ABSTRACTS OF JAPAN vol. 010, no. 337 (E-454), 14.November 1986 & JP 61 141225 A (MATSUSHITA ELECTRIC IND CO LTD), 28.Juni 1986,

## Beschreibung

Die Erfindung geht von einem Rundfunk-Empfänger mit den Merkmalen des Oberbegriffs des Hauptanspruchs aus.

Ein Rundfunkempfänger gemäß Oberbegriff der Haüptansprüche ist beispielsweise auf Patent Abstrakt of Japan vol. 010,no.337 (E-454), 14. November 1986 zu JP-A- 61 141 225 bekannt.

Gegenstand der Radio-Datensystem (RDS) DIN-Norm EN 50 067 sind ü.a. spezielle RDS-Rundfunkempfänger. In dieser Norm ist auch die Übertragung von alternativen Frequenzen zu dem im Rundfunk-Empfänger momentan eingestellten Sender festgelegt. Diese alternativen Frequenzen ermöglichen es, in Empfängern mit entsprechenden Speichern die Umschaltzeit auf einen anderen Sender des gleichen Programms zu verkürzen (EN 50 067, Seite 28, Ziffer 4.5). Es sind inzwischen zahlreiche Rundfunkempfänger auf dem Markt (z. B. Gerätetyp Blaupunkt Paris) die während des Empfangs eines eingestellten Senders die Qualität der unter den alternativen Frequenzen empfangbaren Sendern kurz testen und erst danach über ein Verbleiben bei der Testfrequenz oder einen Rücksprung zur Ausgangsfrequenz entscheiden.

US-A-5 345 602 offenbart einen Rundfunkempfänger mit zwei Empfangsteilen, mit dem sowohl ein Antennen-Diversity-Betrieb als auch alternativ dazu ein Zwei-Empfänger-Betrieb realisierbar ist. Im Zwei-Empfänger-Betrieb dient ein erster Empfänger dem (dauernden) Empfang einer Rundfunksendung, während der zweite, deshalb auch als Hintergrundempfänger bezeichnete Empfänger, die zu der empfangenen Rundfunksendung verfügbaren alternativen Frequenzen auf ihre Empfangseigenschaften untersucht.

Ein die Merkmale des Anspruchs 1 aufweisender Rundfunkempfänger zeichnet sich gegenüber den vorstehend genannten Rundfunkgeräten durch den Vorteil einer besonders kurzen Testzeit aus. Diese kurzen Testzeiten verursachen praktisch keine hörbaren Störungen mehr bei dem Empfang der mit dem eingestellten Sender übertragenen Sendung durch die Testphasen. Aufgrund der Störfreiheit können Qualitätstests häufiger durchgeführt werden und mehr Qualitätsparameter in getrennten kurzen Testphasen geprüft werden. Zwischen den Testphasen kann die jeweils beste alternative Frequenz zum Wechsel bereitgehalten werden.

Die Erfindung wird anhand eines RDS-Rundfunkempfängers beschrieben, ist jedoch nicht auf RDS-Rundfunkempfänger beschränkt, sondern z. B. auch für digitalen Rundfunkempfänger anwendbar. Verfügt der RDS-Rundfunkempfänger über einen selektiven Zwischenkreis und ist er entsprechend den Merkmalen des Anspruchs 2 ausgelegt, dann ist es von Vorteil, die Steuerung des selektiven Zwischenkreises entsprechend den Merkmalen des Anspruchs 3 auszubilden.

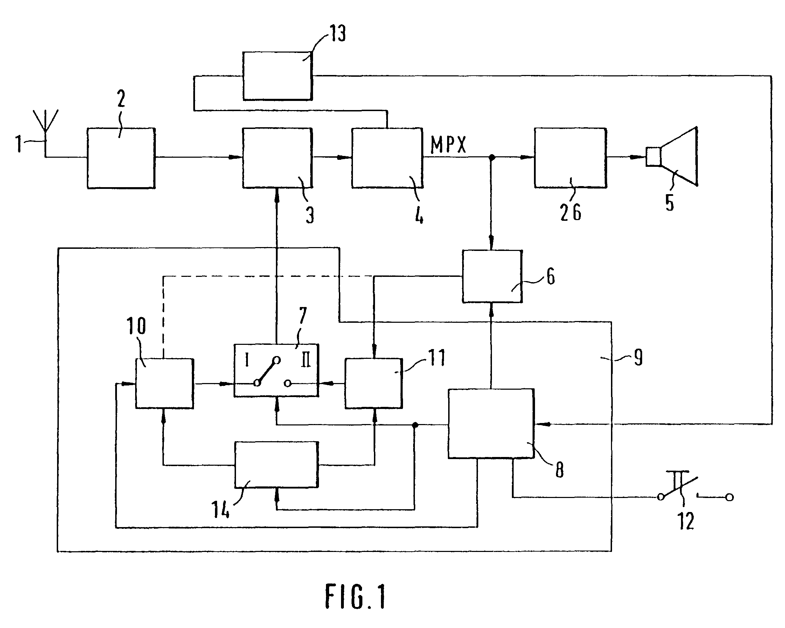

Der Gegenstand des Schutzrechts wird im folgenden anhand der Zeichnung näher erläutert. In der Zeichnung zeigen
- Figur 1: ein Blockschaltbild eines RDS-Rundfunkempfängers, der erfindungsgemäß aufgebaut ist
- Figur 2: ein Blockschaltbild eines RDS-Rundfunkempfängers mit PLL-gesteu erten Oszillatoren und mit einem selektiven Zwischenkreis

Der von einem fernen RDS-Sender ausgestrahlte frequenzmodulierte Träger gelangt über die Antenne 1 in die UKW-Vorstufe 2 des Rundfunk-Empfängers. In der an die Vorstufe 2 angeschlossene Mischstufe 3 wir dem modulierten Träger eine Oszillator-Frequenz überlagert. Dabei entsteht die mit der Nutz-Modulation modulierte Zwischenfrequenz, die in bekannter Weise von dem Rundfunk-Empfänger in der Zwischenfrequenzstufe 4 verstärkt und demoduliert wird. Am Ausgang der Zwischenfrequenzstufe 4 lassen sich neben dem über eine NF-Stufe 26 mit Hilfe des Lautsprechers 5 wiedergegebenen Nutzsignal auch die Radiodaten abnehmen, die in einem RDS-Decoder 6 ausgewertet werden.

Der RDS-Decoder 6 umfaßt einen Speicher für die Daten der zum eingestellten Sender alternativen Frequenzen und hält diese Daten für die Testphasen in der aus der DIN EN 50 067 bekannten Weise bereit.

Die dem modulierten Träger in der Mischstufe 3 zu überlagernden Oszillatorfrequenz mit der Mischstufe 3 über einen Umschalter 7 zugeführt, dessen Umschaltung von dem Programm-Prozessor 8 in einem Tuner 9 gesteuert wird.

Der erste Eingang I des Umschalters 7 ist mit dem Ausgang eines ersten Oszillators 10, sein zweiter Eingang II mit dem Ausgang eines zweiten Oszillators 11 verbunden.

Die Einstellung der vom Hörer gewünschten Sendung erfolgt durch die Wahl der Frequenz des ersten Oszillators 10 über dem Programm-Prozessor 8 mit einer Stationstaste 12. Die dadurch in dem ersten Oszillator 10 eingestellte Oszillatorfrequenz f_{osc1} überlagert sich in der Mischstufe 3 mit der Frequenz des empfangenen Trägers. Die in dessen Modulation übertragenen alternativen Frequenzen werden im RDS-Decoder 6 in bekannter Weise ausgewertet und dort oder im Programm-Prozessor 8 gespeichert. Zugleich werden in der Meßstufe 13 die Feldstärke und gegebenenfalls andere Qualitätsparameter des empfangenen Signals gemessen.

Zu Beginn einer der von dem Programm-Prozessor 8 zeitweise eingeschalteten Testphasen wird in dem Speicher eine alternative Frequenz aufgerufen und der zweite Oszillator 11 entsprechend abgestimmt. Nach Ablauf der für das Einschwingen des Oszillators auf die neue Frequenz benötigten Zeitdauer beginnt die eigentliche Testphase, für die der Umschalter 7 von dem Programm-Prozessor 8 in seine Stellung II umgeschaltet wird.

In dieser Stellung überlagert sich in der Mischstufe 3 die vom zweiten Oszillator 11 erzeugte Oszillator-Frequenz f_{osc2} dem Antennensignal. Dadurch wird nunmehr der Träger mit der ersten alternativen Frequenz in die zwischenfrequente Lage umgesetzt. Dann werden dessen Feldstärke und/oder andere Signalqualitätsparameter in der Meßstufe 13 gemessen und mit den Meßwerten des ursprünglich eingestellten Senders verglichen.

Zugleich mit der Umschaltung des Umschalters 7 wird eine Pegel-Steuereinheit 14 wirksam geschaltet, die den Pegel des Ausgangssignals des zweiten Oszillators 11 anhebt und den Pegel des ersten Oszillators 10 absenkt, damit ein Übersprechen vermieden wird.

Da die Testphase erst beginnt, wenn der zweite Oszillator 11 auf eine alternative Frequenz eingeschwungen ist, bleibt der einige Millisekunden erfordernde Einschwingvorgang des Oszillators aus der Testphase ausgeblendet. Der Umschalter 7 selbst benötigt nur einige Mikrosekunden für die Umschaltung. In gleicher zeitlicher Größenordnung liegt auch die Pegelanpassung.

Der Umschalter 7 verharrt in seiner Stellung II, wenn die alternative Frequenz mit einer höheren Feldstärke einfällt oder einen bessern Wert eines anderen Qualitätsparameters aufweist. Andernfalls springt der Umschalter 7 sofort in seine Stellung I zurück.

Nach einem Rücksprung wird die Frequenz des zweiten Oszillators 11 entsprechend einer anderen alternativen Frequenz geändert und danach eine neue Testphase eingeleitet.

Verharrt der Umschalter 7 aufgrund des Meßwertes in seiner Stellung II, so wird er erst bei Beginn der nächsten Testphase in seine Stellung I zurückgesetzt, um zu prüfen, ob der ursprünglich mit dem ersten Oszillator 10 eingestellte Sender, dessen Einstellung unverändert geblieben ist, zwischenzeitlich wieder besser empfangbar ist.

Der Programmprozessor 8 kann auch so ausgelegt sein, daß beim Verharren des Umschalters 7 in seiner Stellung II der erste Oszillator 10 auf eine andere der im RDS-Decoder 6 gespeicherten alternativen Frequenzen des ursprünglich eingestellten Senders abgestimmt wird und während der nächsten Testphase der Umschalter 7 versuchsweise in seiner Stellung I zurückgeschaltet wird. (Dies ist durch die gestrichelt dargestellte Verbindungsleitung zwischen dem RDS-Decoder 6 und dem Oszillator 10 angedeutet).

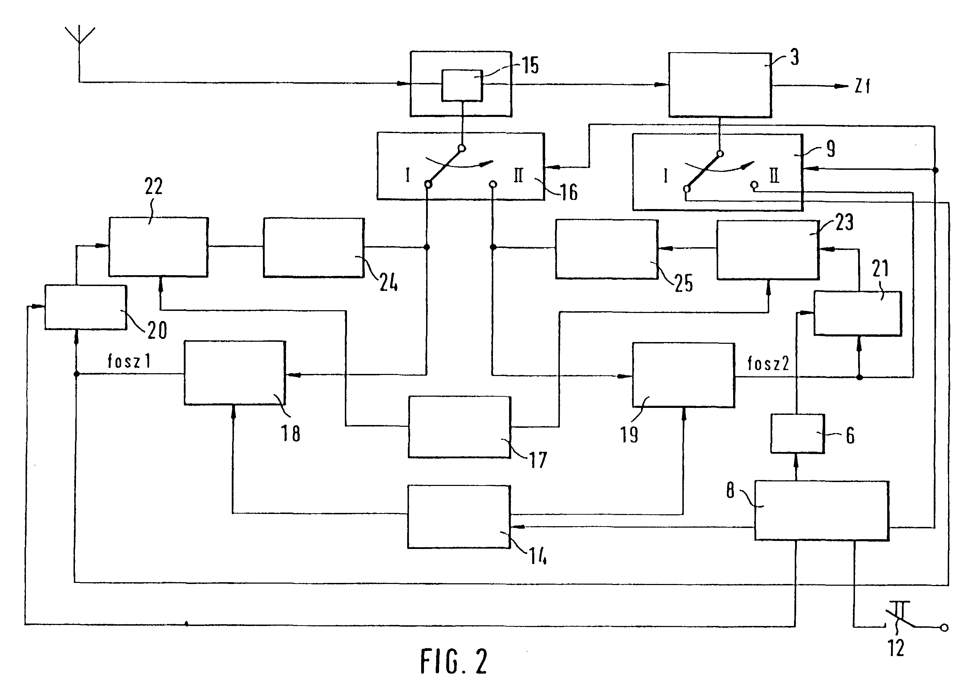

Wird jeder der beiden Oszillatoren 10 und 11 von einer PLL gesteuert, wie dies in Figur 2 dargestellt ist, und umfaßt die UKW-Vorstufe 2 einen selektiven Zwischenkreis 15, dann wird dieser Zwischenkreis 15 durch einen zweiten Umschalter 16 synchron mit dem ersten Umschalter 7 auf die alternative Frequenz umgeschaltet.

Jede der steuernden PLL umfaßt neben der gemeinsamen Referenz 17 einen VCO 18 bzw. 19 mit einstellbarem Pegel, einen einstellbaren Teiler 20 bzw. 21, einen Phasendiskriminator 22 bzw. 23 und je ein Schleifenfilter 24 bzw. 25. Die Ausgänge der Schleifenfilter 24, 25 sind auf die Eingänge des zugeordneten VCO zurückgeführt. Zugleich ist der Ausgang des Schleifenfilters 24 mit dem Eingang I des Umschalters 16 und der Ausgang des Schleifenfilters 25 mit dessen Eingang II verbunden. Entsprechend der Größe der Ausgangsspannung des eingeschalteten Schleifenfilters wird die Mittenfrequenz des einen Bandpaß darstellenden selektiven Zwischenkreises 15 in bekannter Weise verschoben.

## Patentansprüche

1. Rundfunkempfänger mit
Mitteln (6) zum Empfang und zur Auswertung über einen eingestellten Sender empfangener Alternativfrequenzdaten,
einem Speicher für alternative Frequenzen eines eingestellten Senders,
Mitteln zur Abstimmung des Rundfunkempfängers auf einen Sender umfassend eine Mischstufe (3), zwei getrennte unabhängig voneinander in ihrer Frequenz einstellbare Oszillatoren (10, 11), von denen mindestens ein Oszillator (11) in seiner Frequenz auf eine alternative Frequenz einstellbar ist, einen Umschalter (7) zur wahlweisen Verbindung eines der Oszillatoren (10, 11) mit der Mischstufe (3), und Steuermitteln (8) zur Abstimmung des mindestens einen Oszillators (11) auf eine aus dem Speicher ausgelesene alternative Frequenz und zur Ansteuerung des Umschalters (7),
**dadurch gekennzeichnet,**
**dass** die Steuermittel (8) dazu ausgebildet sind, bei Abstimmung des mindestens einen Oszillators (11) auf die alternative Frequenz erst nach Ablauf der zum Einschwingen des mindestens einen Oszillators (11) auf die alternative Frequenz erforderlichen Zeitdauer den Umschalter (7) zur Verbindung des mindestens einen Oszillators (11) mit der Mischstufe (3) anzusteuern.

2. Rundfunkempfänger nach Anspruch 1, **dadurch gekennzeichnet, dass** die Oszillatoren PLL-gesteuert sind.

3. Rundfunkempfänger nach Anspruch 2 mit einem selektiven Zwischenkreis in der HF-Stufe, **gekennzeichnet durch**, einen synchron mit dem ersten Umschalter (7) geschalteten zweiten Umschalter (16), der den Ausgang eines des PLL-Schleifenfilters (24, 25) des jeweils einzuschaltenden Oszillators (18, 19) mit dem Steuereingang des selektiven Zwischenkreises (15) verbindet.

4. Rundfunkempfänger nach einem der vorhergehenden Ansprüche, **dadurch gekennzeichnet, dass** die Oszillatoren (10, 11) weiterhin in ihrem Pegel einstellbar sind, und dass eine Pegelsteuereinheit (14) vorgesehen ist, die den Pegel des einzuschaltenden Oszillators (11, 10) bei seiner Verbindung mit der Mischstufe (3) anhebt und den Pegel des abzuschaltenden Oszillators (10, 11) bei seiner Trennung von der Mischstufe (3) absenkt.

## Claims

1. Broadcast radio receiver having
means (6) for receiving and evaluating alternative-frequency data received via a station which has been set,
a memory for alternative frequencies for a station which has been set,
means for tuning the broadcast radio receiver to a station, comprising a mixing stage (3), two separate oscillators (10, 11) whose frequency can be set independently of one another and at least one oscillator (11) of which can have a frequency set to an alternative frequency, a changeover switch (7) for selectively connecting one of the oscillators (10, 11) to the mixing stage (3), and a control means (8) for tuning the at least one oscillator (11) to an alternative frequency which is read from the memory and for actuating the changeover switch (7),
**characterized**
**in that** the control means (8) are designed so that, when tuning the at least one oscillator (11) to the alternative frequency, the changeover switch (7) is not actuated for the purpose of connecting the at least one oscillator (11) to the mixing stage (3) until after the period of time which is required for the at least one oscillator (11) to lock onto the alternative frequency has elapsed.

2. Broadcast radio receiver according to Claim 1, **characterized in that** the oscillators are PLL-controlled.

3. Broadcast radio receiver according to Claim 2, having a selective intermediate circuit in the RF stage, **characterized by** a second changeover switch (16) which is switched in sync with the first changeover switch (7) and which connects the output of a PLL loop filter (24, 25) in the respective oscillator (18, 19) which is to be turned on to the control input of the selective intermediate circuit (15).

4. Broadcast radio receiver according to one of the preceding claims, **characterized in that** the oscillators (10, 11) can also have their level set, and **in that** a level control unit (14) is provided which raises the level of the oscillator (11, 10) which is to be turned on when it is connected to the mixing stage (3) and lowers the level of the oscillator (10, 11) which is to be turned off when it is isolated from the mixing stage (3).

## Revendications

1. Récepteur radio comportant :
des moyens (6) permettant de recevoir et d'exploiter des données de fréquence alternative reçues par le biais d'un émetteur réglé,
une mémoire pour les fréquences alternatives d'un émetteur réglé,
des moyens permettant de régler le récepteur radio par rapport à un émetteur, comprenant un étage mélangeur (3), deux oscillateurs (10, 11) séparés dont la fréquence est réglable indépendamment l'un de l'autre, parmi lesquels la fréquence d'au moins un oscillateur (11) est réglable à une fréquence alternative, un commutateur (7) permettant de relier sélectivement l'un des oscillateurs (10, 11) avec l'étage mélangeur (3), et des moyens de commande (8) permettant de régler l'au moins un oscillateur (11) sur une fréquence alternative lue à partir de la mémoire (8) et permettant d'activer le commutateur (7),
**caractérisé en ce que**
les moyens de commande (8) sont configurés dans le but d'activer le commutateur (7) afin de relier l'au moins un oscillateur (11) à l'étage mélangeur (3), lors du réglage de l'au moins un oscillateur (11) sur la fréquence alternative, et seulement après écoulement de la durée nécessaire pour que l'au moins un oscillateur (11) se stabilise sur la fréquence alternative.

2. Récepteur radio selon la revendication 1,
**caractérisé en ce que**
les oscillateurs sont commandés par PLL.

3. Récepteur radio selon la revendication 2, comportant un circuit intermédiaire sélectif dans l'étage HF,
**caractérisé par**
un deuxième commutateur (16), actionné de façon synchronisée avec le premier commutateur (7), qui relie la sortie de l'un des filtres de boucle PLL (24, 25) de l'oscillateur respectif à activer (18, 19) avec l'entrée de commande du circuit intermédiaire sélectif (15).

4. Récepteur radio selon l'une des revendications précédentes,
**caractérisé en ce que**
les oscillateurs (10, 11) sont en outre réglables en ce qui concerne leur niveau, et il est prévu une unité de commande de niveau (14) qui augmente le niveau de l'oscillateur à activer (11, 10) lorsqu'il est relié à l'étage mélangeur (3) et abaisse le niveau de l'oscillateur à désactiver (10, 11) lorsqu'il est séparé de l'étage mélangeur (3).
